(19) Europäisches Patentamt
European Patent Office
Office européen des brevets

(11) Numéro de publication: **0 084 544**
**B1**

(12) **FASCICULE DE BREVET EUROPEEN**

(45) Date de publication du fascicule du brevet: **27.12.85**

(51) Int. Cl.[4]: **C 08 F 2/38**, C 08 F 220/04, C 08 F 8/14

(21) Numéro de dépôt: **82902181.5**

(22) Date de dépôt: **20.07.82**

(86) Numéro de dépôt international: **PCT/FR 82/00122**

(87) Numéro de publication internationale: **WO 83/00336 (03.02.83** Gazette **83/4)**

(54) **TELOMERES PHOTORETICULABLES ET PROCEDE D'OBTENTION.**

(30) Priorité: **22.07.81 FR 8114789**

(43) Date de publication de la demande: **03.08.83 Bulletin 83/31**

(45) Mention de la délivrance du brevet: **27.12.85 Bulletin 85/52**

(84) Etats contractants désignés: **AT BE CH DE GB LI LU NL SE**

(56) Documents cités: **FR - A - 2 412 572**

(73) Titulaire: **CEGEDUR SOCIETE DE TRANSFORMATION DE L'ALUMINIUM PECHINEY, 66, Avenue Marceau, F-75361 Paris Cédex 08 (FR)**

(72) Inventeur: **BOUTEVIN, Bernard, Lotissement "Les Terres Blanches" 1, place, Anselme Mathieu 34100 Montpellier (FR)**
Inventeur: **DEISS, Willy-Jean, 8, boulevard du Maréchal Leclerc, F-38000 Grenoble (FR)**
Inventeur: **MALISZEWICZ, Marc, Lotissement "Les Terres Blanches", 5, rue Jean Brunet 34100 Montpellier (FR)**
Inventeur: **PIETRASANTA, Yves, 14, place Meril Poujade, F-34140 Meze (FR)**

(74) Mandataire: **Vanlaer, Marcel et al, PECHINEY 28, rue de Bonnel, F-69433 Lyon Cédex 3 (FR)**

EP 0 084 544 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

**Description**

La présente invention est relative à des télomères présentant une ou plusieurs séquences dont l'une au moins possède, sur sa longueur, des groupements latéraux insaturés répartis statistiquement et ayant des propriétés de photoréticulation.

Cette invention concerne également un procédé d'obtention de ces télomères.

Les télomères sont des produits organiques de synthèse résultant d'une réaction dite de télomérisation dans laquelle un composé organique non saturé $X_i$ appelé »taxogène« réagit en présence de catalyseurs ou d'initiateurs avec un autre composé AZ appelé »télogène« pour donner par condensation de $X_i$ la formation d'une séquence de n maillons bivalents $-(X_i)-$, et la division du télogène AZ en deux parties qui viennent s'accrocher aux extrémités de la séquence pour donner un produit de formule générale: $A-(X_{i_n})-Z$ appelé télomère. Celui-ci peut, à son tour, servir d'agent télogène pour un autre taxogène $Y_i$ et conduire à l'obtention de cotélomères biséquencés de formule générale:

$$A'-(Y_{i_n})-A''-(X_{i_n})-Z$$

ou A' et A" résultent de la division de A.

La demanderesse s'est intéressée particulièrement à ces produits et à leurs dérivés résultant du greffage sur l'une au moins des séquences de greffons latéraux insaturés.

Les molécules de bas poids moléculaire possédant des insaturations sont déjà connues ou commercialisées. Par exemple, dans le cas le greffons allyliques, la commercialisation de la tétraallyl-oxy-1,1,2,2 éthane est un fait et, dans le cas des greffons acryliques, on connaît les acrylates de diols, de triols ou de tétraols. Mais, ces composés ne comportent pas plus de quatre groupements photopolymérisables.

Des molécules de poids moléculaire compris entre 1000 et 3000 (oligomères téléchéliques) possédant deux groupements acryliques en extrémités de chaîne sont largement utilisées industriellement. Ces macromolécules sont obtenues, par exemple, à partir de polyesters ou de polyuréthanes dihydroxylés.

Enfin, des polymères de haut poids moléculaire possédant des groupements acryliques et/ou allyliques substitués sont connus depuis longtemps et leurs applications font encore l'objet de nombreux brevets et publications. On peut citer, par exemple, les alcools polyvinyliques et les poly-(meth)acrylates de glycol substitués par des groupements acryliques du type cinnamique, $\beta$-(2-furyl)acrylique, $\beta$-(pyridyl)acrylique. Pour ce type de macromolécules, très peu de composés à greffons acryliques ou allyliques non substitués ont été décrits dans la littérature. Notons, néamoins, le brevet français n° 2 412 572 où ces greffons sont réalisés à l'aide de ponts carbonates.

L'originalité de l'invention provient du fait que l'on a synthétisé des télomères monoséquencés et des télomères biséquencés ou cotélomères ayant des séquences de longueur déterminée et réalisé sur ceux-ci le greffage en nombre contrôle de groupements particuliers. Ce qui a conduit à des produit nouveaux présentant une combinaison de propriétés intéressantes susceptibles d'application dans différents domaines techniques.

C'est ainsi que la demanderesse a pu faire des produits ayant des séquences de longueur courte, c'est-à-dire de masse moléculaire relativement petite ayant en conséquence, une viscosité faible et par suite pouvant être utilisés sans solvant.

Elle a également mis au point des télomères monoséquencés ayant des maillons de structure telle qu'il a été possible d'y accrocher un certain nombre de groupements à haute réactivité comme les dérivés acryliques et allyliques leur conférant ainsi des propriétés de photoréticulation remarquables mais tout en laissant des maillons de la séquence non greffés et leur permettant ainsi d'exercer leurs propres propriétés, à savoir, par exemple dans le cas de maillons à fonction acide ou alcool une solubilité plus ou moins grande dans l'eau ou une aptitude à l'adhérence sur les métaux.

En étendant son invention à des télomères biséquencés, la demanderesse a pu, suivant la constitution de cette deuxième séquence, faire apparaître ou développer d'autres propriétés telles que, par exemple, des propriétés de surface améliorées lorsqu'il y a présence de radicaux fluorés, ou de souplesse quand il s'agit de radicaux diéniques ou encore de résistance aux hydrocarbures quand on fait appel à des radicaux acryliques tels que l'acrylonitrile, par exemple.

Les télomères selon l'invention répondent à la formule générale:

$$R-CCl_2-(X_i)_x-\begin{pmatrix} X_i \\ | \\ R' \end{pmatrix}_y-Z$$

dans laquelle la séquence des maillons

$$-(X_i)- \quad \text{et} \quad -\begin{pmatrix} X_i \\ | \\ R' \end{pmatrix}-$$

est issue d'un même taxogène $X_i$ possédant une fonction libre appartenant au groupe constitué par les fonctions alcool primaire, acide, alcool secondaire et où les maillons

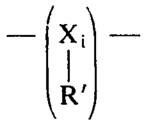

correspondent à la forme estérifiée de $X_i$, R' étant le radical du groupement servant à l'estérification, $RCCl_2-$ et $-Z$ étant les parties du télogène $RCCl_2Z$ où $-Z$ appartient au groupe constitué par les radicaux $-H$, $-Cl$, $-Br$ et R appartient au groupe constitué par des radicaux simples et des radicaux macromoléculaires caractérisés en ce que $X_i$ appartient au groupe constitué par les sous-groupes $X_1$, $X_2$, $X_3$, $X_4$ dans lesquels $X_1$ est répresente par l'acrylate d'hydroxy 2 éthyle et le méthacrylate d'hydroxy 2 éthyle, $X_2$ est représenté par l'acide acrylique et l'acide méthacrylique, $X_3$ est représenté par l'alcool vinylique, $X_4$ est représenté par l'alcool allylique, que $0 < x \leq 500$, $1 < y \leq 500$, $1 < x + y \leq 1000$, que le groupement servant à l'estérification possède au moins une double liaison photoréticulable et appartient au groupe constitué par des acides et des chlorures d'acides pour $X_1$, $X_3$ et $X_4$ et par des alcools pour $X_2$.

Ainsi les télomères revendiqués sont caractérisés notamment par la présence d'une séquence où le taxogène présente une fonction libre telle que la fonction alcool primaire dans l'acrylate, le méthacrylate d'hydroxy 2 éthyle et l'alcool allylique, la fonction acide dans l'acide acrylique et méthacrylique et la fonction alcool secondaire dans l'alcool vinylique. Le nombre de maillons de cette séquence est compris entre 1 et 1000 et parmi ceux-ci tous ou au moins la moitié sont estérifiés par des groupements acides ou alcools présentant au moins une liaison éthylénique photoréticulable. Ces groupements sont répartis statistiquement le long de la séquence et permettent au télomére obtenu, de développer simultanément les propriétés liées à la présence des différentes fonctions non estérifiées.

Suivant la structure du taxogène formant les maillons de la séquence, on peut utiliser différents groupements pour assurer l'estérification. C'est ainsi que dans le cas où le taxogène est $X_1$ ou $X_3$ ou $X_4$ et possède donc une fonction alcool, on choisit l'acide acrylique, ou l'acide méthacrylique ou l'acide cinnamique ou l'acide furyl acrylique ou l'acide cinnamylidène ou encore l'acide allylique. Dans le cas où le taxogène possède une fonction acide repérée par $X_2$, on choisit un alcool tel que l'acrylate ou le méthacrylate d'hydroxy 2 éthyle, ou l'alcool allylique ou encore l'alcool cinnamique.

Z qui peut être un radical $-H$, $-Cl$ ou $-Br$ est de préference limité au radical $-Cl$ quand le taxogène est du type $X_1$ et $X_2$.

En ce qui concerne R, il appartient au groupe constitué par des radicaux simples et des radicaux macromoléculaires. Ces radicaux macromoléculaires sont issus d'autres télomères dans lesquels $Y_1$ est le taxogène et conduisent alors à la formation de cotélomères biséquencés bénéficiant des avantages apportés par les propriétés des deux séquences.

En fonction du taxogène $X_i$, le radical R peut prendre différentes formes.

C'est ainsi qu'avec $X_1$, R est un radical simple appartenant au groupe constitué par $-Cl$, $CH_3-O-CO-$, $CF_3-$ correspondant respectivement aux télogènes tétrachlorure de carbone, trichloroacétate de méthyle et trifluorotrichloroéthane.

R peut aussi être un radical macromoléculaire appartenant au groupe constitué par:

$$-(CF_2-CFCl)_{n_1}-Cl$$

où $1 \leq n_1 \leq 10$

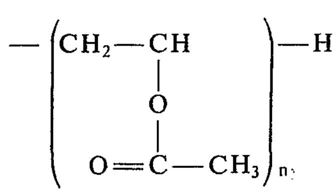

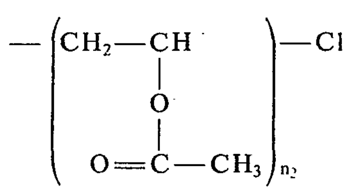

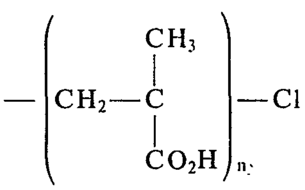

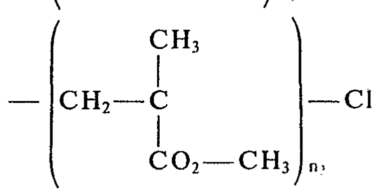

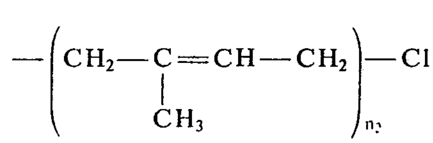

où $1 \leq n_2 \leq 500$

c'est-à-dire que ces radicaux sont issus respectivement des télomères chlorotrifluoroéthylène-tétrachlorure de carbone, acétate de vinyle-chloroforme, acétate de vinyle-tétrachlorure de carbone, acide méthacrylique-tétrachlorure de carbone, méthacrylate de méthyle-tétrachlorure de carbone, isoprène-tétrachlorure de carbone.

Avec $X_2$, R peut être un radical simple appartenant au groupe constitué par $-Cl$ et $-CF_3$ correspondant respectivement aux télogènes tétrachlorure de carbone et trifluorotrichloroéthane, et aussi le radical macromoléculaire $-(CF_2-CFCl)_n-Cl$ où $1 \leq n_1 \leq 10$, c'est-à-dire qu'il est issu du télomère chlorotrifluoroéthylène-tétrachlorure de carbone.

Avec $X_3$, R peut être le radical simple appartenant au groupe constitué par $-Cl$, $(C_2H_5O)_2-PO-$ ou un radical macromoléculaire appartenant au groupe constitué par

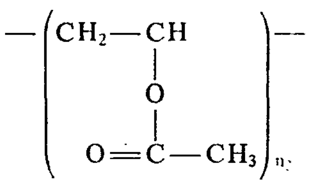

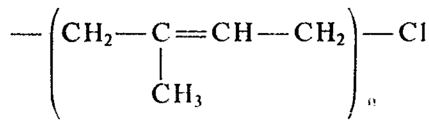

où $1 \leq n_2 \leq 500$, c'est-à-dire que ces radicaux sont issus respectivement des télomères tétrachlorure de carbone, chloroforme, hydrogénophosphonate de diéthyle, bromotrichlorométhane et des télomères acétate de vinyle et isoprène avec les télogènes tétrachlorure de carbone ou chloroforme.

Avec $X_4$, R peut être un radical simple appartenant au groupe constitué par $-CCl_2-CO_2H$, $-CCl_2-CO_2CH_3$, $-CCl_3$, $(C_2H_5O)_2-P(O)-$, c'est-à-dire qu'ils sont issus respectivement des télogènes: acide trichloroacétique, trichloroacétate de méthyle, chloroforme, hydrogénophosphonate de diéthyle.

La présente invention concerne également un procédé de fabrication des télomères et cotélomères décrits ci-dessus.

De manière générale, on procède en deux étapes principales:

- La première consiste en une télomérisation du taxogène qui peut être dédoublée en réutilisant le télomère obtenu comme nouvel agent télogène pour l'obtention de cotélomères biséquencés; il s'agit alors d'une bistélomérisation.
- la deuxième consiste en une estérification au cours de laquelle on greffe sur les maillons de la séquence du télomère ou de l'une au moins des séquences du cotélomère un groupement non saturé destiné à rendre le produit obtenu photoréticulable.

Toutefois, il est aussi possible dans certains cas de procéder à l'estérification avant de téloměriser.

Mais, suivant le taxogène mis en œuvre dans une télomérisation ou le taxogène présent dans le radical macromoléculaire R intervenant dans une bistélomérisation, des particularités apparaissent dans la synthèse de chacun de ces produits.

Ainsi, dans le cas d'une réaction de télomérisation, si le taxogène utilisé est du type vinylique, diénique conjugué, allylique, l'agent télogène choisi est le chloroforme et la catalyse est alors péroxydique (le péroxyde de benzoyle ou l'azobisisobutyronitrile sont alors utilisés comme initiateurs de télomérisation). La coupure qui s'effectue est la coupure C—H et dans ce cas, une des extrémités téléchéliques est le groupe trichlorométhyle: $CCl_3$.

Si le taxogène est du type acrylique, diénique conjugué ou le chlorotrifluoroéthylène, l'agent télogène est alors de tétrachlorure de carbone et la catalyse est du type redox (le couple $FeCl_3$/benzoïne est le plus utilisé mais d'autres métaux et/ou sels de métaux de transition: Mg, Cu, etc. peuvent eux aussi être employés). Dans ces cas, la coupure de l'agent télogène est du type C—Cl mais comme dans le cas cité ci-dessus, il reste toujours à l'extrémité du télomère un groupement trichlorométhyle.

Dans le cas d'une réaction de bistélomérisation où les télomères obtenus ci-dessus, et qui sont du type $RCCl_3$, servent alors d'agents télogènes, si le nouveau taxogène est vinylique, cette réaction se fait par catalyse péroxydique (voir ci-dessus). Pour tous les autres taxogènes: acrylique, diénique conjugué, chlorotrifluoroéthylène, la catalyse est de type redox.

De plus, lorsque les taxogènes sont du type vinylique et allylique, on utilise respectivement l'acétate de vinyle et l'acétate d'allyle comme matériau de base pour la télomérisation et on procède ensuite à une hydrolyse en présence de méthanolate de sodium de façon à faire apparaître les fonctions alcool sur lesquelles seront greffés par la suite les groupements photoréticulables.

En ce qui concerne le nombre de maillons: x + y, figurant dans les différentes séquences des taxogènes, il est indiqué par le degré de polymérisation moyen en nombre $\overline{DP_n}$, et l'indice de polydispersité $\overline{DP_0}$ de la réaction de télomérisation qui sont fonction de paramètres déjà connus dans la littérature.

Mayo a défini une loi générale pour la télomérisation péroxydique:

$$\frac{1}{\overline{DP_n}} = \frac{1}{\overline{DP_0}} + C_T r$$

et Boutevin et coll pour les télomérisations par catalyse redox:

$$\frac{1}{\overline{DP_n}} = C_{cat}c + C_T r$$

avec

$$c = \frac{(Cata)}{(Taxo)} \text{ et } r = \frac{(Télo)}{(Taxo)},$$

$C_T$ et $C_{cat}$ étant les constantes de transfert au télogène et au catalyseur.

Ces lois ont été appliquées dans le cadre de l'invention et ont permis de déterminer au préalable les $\overline{DP_n}$ des différentes séquences souhaitées. Les résultats obtenus en tubes scellés ont été ensuite extrapolés sur réacteur semi-industriel pour des manipulations pilotes. Dans celui-ci, les étapes 1 et 2, étapes permettant d'arriver aux cotélomères biséquencés, ont du être effectuées d'une seule traite après addition du second monomère dans la réaction lorsque la première étape a été menée à son terme (voir exemple n° 4).

Pour ce qui est de l'estérification, différentes méthodes dans le cas des molécules simples ou des polymères ont été adaptées aux cotélomères biséquencés. Les méthodes utilisées sont fonction des groupements à greffer et des structures des taxogènes.

Ainsi, dans le cas de taxogènes du type $X_1$, $X_3$ et $X_4$ qui forment donc les séquences polyols, on a vu plus haut que les groupements servant à l'estérification étaient soit des acides, soit des chlorures d'acide.

Lorsqu'il s'agit de chlorures d'acide acryliques tels que le chlorure d'acide cinnamique par exemple, le mode opératoire utilisé est celui de l'activation par les complexes de pyridinium ou la méthode de Schotten Baumann.

Par contre, lorsqu'il s'agit d'acide acrylique, on recourt à l'estérification azéotropique directe en utilisant l'acide paratoluène sulfonique ou l'acide sulfurique comme catalyseur. Cette estérification s'effectue à l'aide de solvant aromatique ou de solvant du type chloré: $CH_2Cl_2$ ou $CHCl_3$ par exemple lorsque celle-ci doit s'effectuer à faible température du fait du risque de polymérisation thermique.

Dans le cas de taxogènes du type $X_2$ qui forment donc des séquences polyacides, on procède avant greffage à l'activation des fonctions acides par passage au chlorure d'acide en utilisant le chlorure de thionyle pur à reflux. Le greffage s'effectue alors dans le tétrahydrofuranne ou dans tout autre solvant aprotique et exempt d'eau sous courant d'azote.

L'invention sera mieux comprise à l'aide des exemples d'application donnés ci-après à titre non limitatif.

Les réactions de télomérisation ou/et de cotélomérisation ont été effectuées en tubes scellés ou en réacteur sous pression, et, dans le cas où les points d'ébullition des taxogènes et des télogènes sont suffisamment élevés, elles ont été réalisées en réacteur pyrex à pression atmosphérique. L'ensemble des structures décrites dans ces exemples ont été déterminées à l'aide des méthodes d'analyses suivantes: analyse centésimale, résonance magnétique du proton, chromatographie par perméation de gel, mesure de viscosité, spectrophotométrie infra rouge.

## Exemple 1

Télomérisation du taxogène $X_1$: l'acrylate d'hydroxy 2 éthyle avec le télogène 1,1,1 trifluorotrichloroéthane

$$CH_2{=}CH{-}CO_2{-}CH_2{-}CH_2OH + CF_3CCl_3$$

$$\longrightarrow CF_3{-}CCl_2\left(CH_2{-}\underset{\substack{|\\CO_2-CH_2-CH_2OH}}{CH}\right)_n{-}Cl$$

Dans un réacteur, on met 174 g d'acrylate d'hydroxy 2 éthyle; 281,25 g de $CF_3CCl_3$; 2,43 g de chlorure ferrique; 3,15 g de benzoïne et 200 cc d'acétonitrile. On chauffe sous agitation pendant 12 heures à une température de 115°C et sous une pression de 4,4 bars. A la fin de la réaction, on évapore le solvant et on obtient 272 g d'un produit visqueux.

-Par ailleurs, sous 20 Torr (26,6 mbar), on élimine le taxogène n'ayant pas réagi. Le taux de transformation en télomère est égal à 90%. Le composé de monoaddition est séparé par distillation (température d'ébullition: 92°C sous $0,5 \cdot 10^{-2}$ Torr [$0,66 \times 10^{-2}$ mbar]).

Après précipitation fractionnée du brut de réaction, on détermine par analyse centésimale le degré de polymérisation moyen de chaque fraction. On obtient ainsi:

- produits solubles dans l'éther: $\overline{DP_n} \leq 5$ (3% en poids du total)
- produits solubles dans le chloroforme: $\overline{DP_n} = 9$ (53% en poids du total)

– produits solubles dans l'acétone: $\overline{DP_n} = 11$ (26% en poids du total)
– produits solubles dans le méthanol: $\overline{DP_n} = 18$ (18% en poids du total)

## Exemple 2

### Estérification du télomère de l'exemple 1 par l'acide acrylique

On prend le produit $DP_n = 9$. On effectue à 39,5 °C l'estérification azéotropique directe de ce polyol, dans le chlorure de méthylène ($CH_2Cl_2$) et en utilisant l'acide paratoluène sulfonique comme catalyseur, par l'acide acrylique en excès. On obtient après purification le produit suivant:

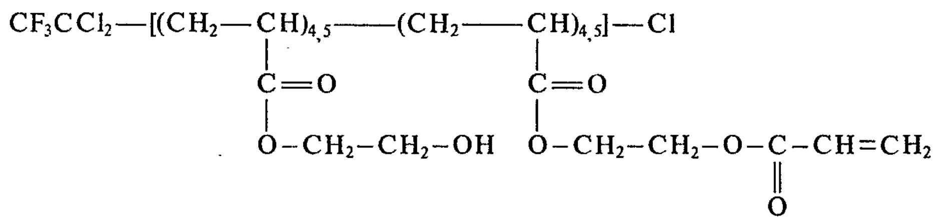

## Exemple 3

### Estérification du télomère de l'exemple 1 par le chlorure de cinnamoyle

Les différentes fractions obtenues à l'exemple 1 sont greffées avec le chlorure de cinnamoyle selon le mode opératoire suivant: dans un ballon à deux tubulures et fond plat, muni d'un réfrigérant et d'une ampoule à brome, et d'un système d'agitation magnétique, on introduit de la pyridine fraîchement distillée. Par l'ampoule à brome, on fait tomber goutte à goutte le chlorure de cinnamoyle en solution dans du tétrachlorure de carbone ou dans du toluène. Après la fin de l'addition et l'apparition d'un précipité laiteux, on introduit le télomère en solution dans la pyridine. Après une demi-heure de réaction à température ambiante, le premier précipité disparaît alors qu'un second précipité granuleux apparaît. On évapore la pyridine et on obtient un produit soluble dans le chloroforme.

Pour toutes les fractions de l'exemple 1, on obtient toujours un greffage de l'ordre de 75%. Dans le cas de la fraction soluble dans le chloroforme ($\overline{DP_n} = 9$), nous obtenons le produit de formule suivante:

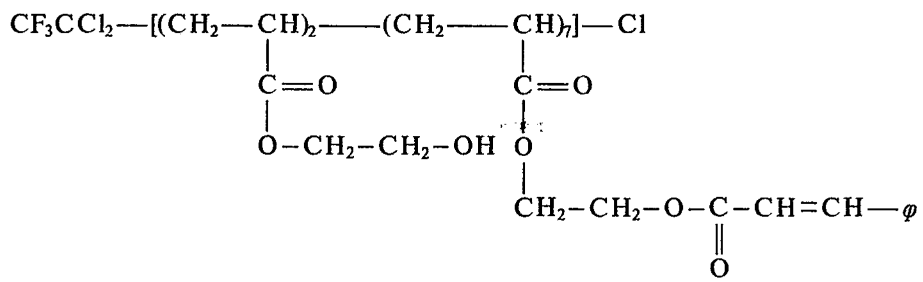

$\varphi$ représentant un noyau benzénique.

## Exemple 4

### Bistélomérisation de l'acrylate d'hydroxy 2 éthyle avec le télomère $CCl_4$-isoprène puis greffage de l'acide acrylique

Dans un réacteur pilote de 4,5 l, on met 773 g d'acrylate d'hydroxy 2 éthyle; 103 g de tétrachlorure de carbone; 683 g d'acétonitrile; 10,8 g de chlorure ferrique; 14 g de benzoïne. On effectue la réaction à 110°C sous 4,4 bars pendant 4 heures, moment où la pression diminue (3,5 bars); on ajoute alors directement 907 g d'isoprène. On prolonge la réaction pendant 6 heures. Après évaporation et traitement, on obtient 1095 g de cotélomère biséquencé. On effectue alors le greffage de l'acide acrylique comme décrit à l'exemple 2 et on obtient le produit final:

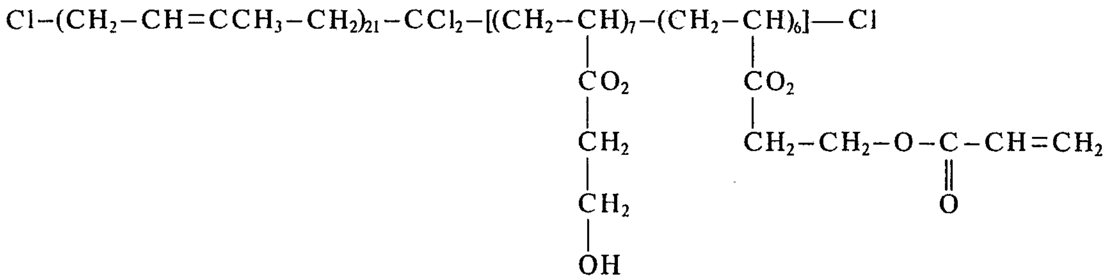

soit un cotélomère biséquencé acrylate d'hydroxy 2 éthyle-isoprène avec un taux de greffons acrylique de l'ordre de 45%.

## Exemple 5

Bistélomérisation du taxogène $X_2$: l'acide acrylique avec le télomère du tétrachlorure de carbone et du chlorotrifluoroéthylène

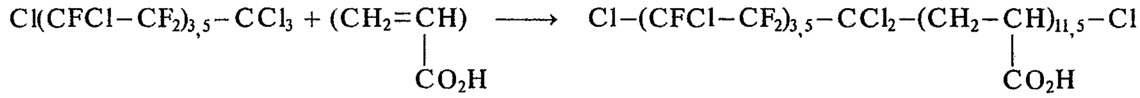

Dans un réacteur pyrex d'une capacité égale à 1 litre, on met 2,5 moles d'acide acrylique (180 g); 0,49 mole de $Cl-(CFCl-CF_2)_{3,5}-CCl_3$ (77,5 g); $2{,}034.10^{-2}$ mole de chlorure ferrique (3,17 g); $1{,}95.10^{-2}$ mole de benzoïne (4,14 g) et 200 g de butyronitrile. La réaction s'effectue au reflux du solvant pendant une durée de 24 heures. Après évaporation du butyronitrile, on récupère le télogène n'ayant pas réagi (14,5 g) et on obtient 140 g de produit. Le taux de transformation en télomère est égal à 50%. Après précipitation fractionnée, on obtient 100 g de produits blancs solides, solubles à l'acétonitrile ($\overline{DP_n} = 44$) et 40 g de produits jaunes solides, solubles à l'éther ($\overline{DP_n} = 11{,}5$).

## Exemple 6

Activation des fonctions acides du cotélomère de l'exemple 5

La fraction de $\overline{DP_n} = 11{,}5$ obtenue à l'exemple 5 est traitée comme suit. Dans un réacteur en pyrex muni d'un réfrigérant, on introduit 27 g de ce télomère. On ajoute du chlorure de thionyle ($SOCl_2$) pur. On chauffe à reflux pendant 114 heures en agitant fortement la solution (agitation magnétique). Après évaporation des produits volatils, on obtient 30,3 g du produit suivant:

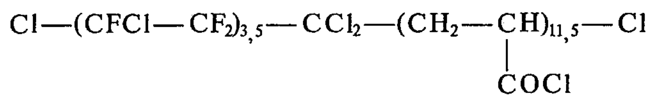

soit une transformation totale des fonctions acides en fonctions chlorures d'acide.

## Exemple 7

Estérification par l'alcool cinnamique du cotélomère de l'exemple précédent

Un tiers en poids du produit obtenu à l'exemple 6 (10,1 g) est mis en solution dans du tétrahydrofuranne anhydre. Dans un ballon muni d'un réfrigérant, d'une ampoule à brome, et d'un système permettant de faire barbotter un courant d'azote dans la solution, on met le cotélomère, ainsi que 19,4 g d'alcool cinnamique. On porte la réaction à une température de 40°C et on la suit par le dégagement d'acide chlorhydrique qui se produit. A la fin de ce dégagement, on évapore le solvant et on obtient, après purification, le produit de formule:

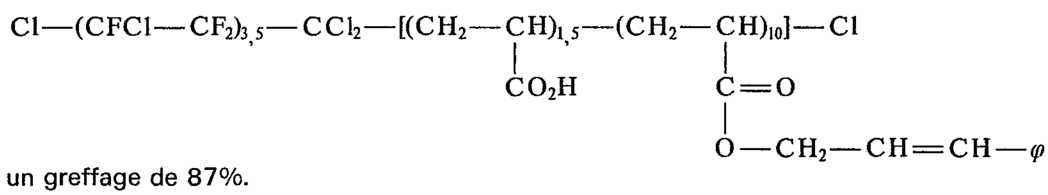

soit un greffage de 87%.

## Exemple 8

### Estérification par l'alcool allylique du cotélomère de l'exemple 6

On effectue le greffage de l'alcool allylique (15 g) sur un second tiers du produit de l'exemple 6 (10,1 g) selon le mode opératoire décrit à l'exemple 7. On obtient, après purification, le produit suivant:

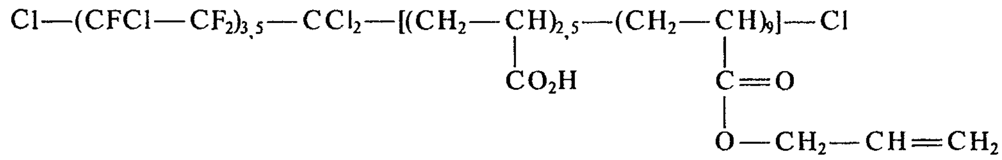

soit un greffage de 71%.

## Exemple 9

### Greffage par l'acrylate d'hydroxy 2 éthyle du cotélomère de l'exemple 6

On effectue le greffage de l'acrylate d'hydroxy 2 éthyle (33,5 g) sur le dernier tiers du produit de l'exemple 6 (10,1 g) selon le mode opératoire décrit à l'exemple 7, mais cette fois à température ambiante. Après purification, on obtient le produit suivant:

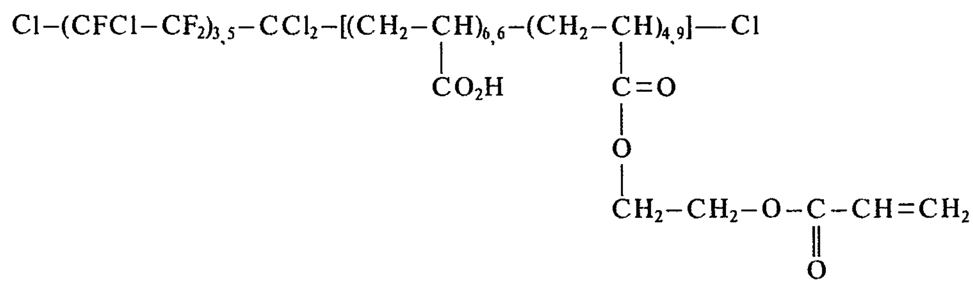

soit un greffage de 43%.

## Exemple 10

### Bistélomérisation du taxogène $Y_1$: l'isoprène avec le télomère acétate de vinyle-chloroforme

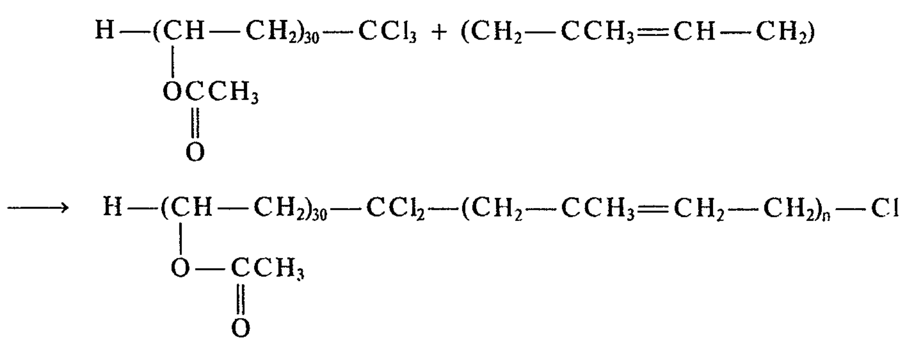

Dans un tube scellé, on met 6,75 g (2,5. x $10^{-3}$ mole) de télomère acétate de vinyle-chloroforme ($\overline{DP}_n$ = 30); 6,8 g de méthyl 2 butadiène 1,3 (0,1 mole); 0,13 g de chlorure ferrique; 0,17 g de benzoïne et 30 cc d'acétonitrile. Après un temps de réaction de 12 heures à une température de 90°C, on obtient 13,8 g d'un produit visqueux. Soit un taux de transformation en cotélomère de 100%.

Exemple 11

Hydrolyse et estérification du cotélomère de l'exemple 10

$$H-(\underset{\underset{\displaystyle OH}{|}}{C}H-CH_2)_{30}-CCl_2-(CH_3-CCH_2{=}CH-CH_2)_n-Cl + 30\ Cl-\underset{\underset{\displaystyle O}{\|}}{C}-CH{=}CH-\varphi$$

Le produit obtenu à l'exemple 10 est traité au méthanolate de sodium. On obtient deux produits: un insoluble au méthanol (70% en poids), et un second, soluble au méthanol et au chloroforme (30% en poids). Pour ces deux produits, on effectue le greffage du chlorure de cinnamoyle selon la méthode exposée à l'exemple 3. On obtient un greffage de 100% et les produits de formules suivantes:

$$70\%\ \text{de}\ H-(\underset{\underset{\displaystyle O\underset{\underset{\displaystyle O}{\|}}{C}-CH{=}CH-\varphi}{|}}{C}H-CH_2)_{30}-CCl_2-(CH_2-CCH_3{=}CH-CH_2)_{65}-Cl$$

$$30\%\ \text{de}\ H-(\underset{\underset{\displaystyle O\underset{\underset{\displaystyle O}{\|}}{C}-CH{=}CH-\varphi}{|}}{C}H-CH_2)_{30}-CCl_2-(CH_2-CCH_3{=}CH-CH_2)_{42}-Cl$$

Exemple 12

Bistélomérisation du télomère acide acrylique-tétrachlorure de carbone avec l'isoprène

$$Cl-(\underset{\underset{\displaystyle CO_2H}{|}}{C}H-CH_2)_{40}-CCl_3 + (CH_2-CCH_3{=}CH-CH_2)$$

On met dans un tube en verre 12,2 g de

$$Cl(\underset{\underset{\displaystyle CO_2H}{|}}{C}H-CH_2)_{40}-CCl_3\ (4 \times 10^{-3}\ \text{mole})$$

synthetisés comme à l'exemple 5, mais en utilisant le tétrachlorure de carbone comme agent télogène et l'acétonitrile comme solvant: 10,88 g d'isoprène (0,16 mole); 0,195 g de chlorure ferrique ($1{,}25.10^{-3}$ mole) et 0,262 g de benzoïne ($1{,}25.10^{-3}$ mole) et 100 cc d'acétonitrile. On obtient 18,2 g de produit, soit un taux de transformation en télomère de 55%. 6 g de ce produit sont solubles dans l'éther et 12 g y sont insolubles. On a donc les produits de formules suivantes:

$$6\ \text{g de}\ Cl-(\underset{\underset{\displaystyle CO_2H}{|}}{C}H-CH_2)_{40}-CCl_2-(CH_2-CCH_3{=}CH-CH_2)_{50}-Cl$$

$$12\ \text{g de}\ Cl-(\underset{\underset{\displaystyle CO_2H}{|}}{C}H-CH_2)_{40}-CCl_2-(CH_2-CCH_3{=}CH-CH_2)_{18}-Cl$$

Exemple 13

Estérification suivie d'une télomérisation

On effectue le greffage du chlorure de cinnamoyle sur l'acrylate d'hydroxy 2 éthyle comme d'écrit à l'exemple 3. On obtient le monomè re suivant:

$$CH_2{=}CH-\underset{\underset{\displaystyle O}{\|}}{C}-O-CH_2-CH_2-O-\underset{\underset{\displaystyle O}{\|}}{C}-CH{=}CH-\varphi$$

avec un rendement de 90%. Ce produit (24,2 g) est alors mis en réaction dans un réacteur en pyrex avec 15,4 g de tétrachlorure de carbone; 1,62 g de chlorure ferrique; 2,12 g de benzoïne et 50 cc d'acétonitrile.

La réaction dure 24 heures à reflux de l'acétonitrile. On obtient 27 g de produit correspondent à la formule:

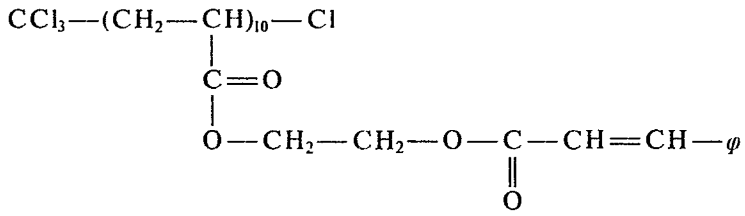

Exemple 14

Télomérisation de l'acétate d'allyle

Dans un réacteur d'une capacité égale à 1 litre, on met 2% en mole de peroxyde de benzoyle, une mole d'acétate d'allyle et r moles de télogène en solution dans 300 ml de benzène. Après élimination du monomère (évaporation et lavage à l'éther de pétrole), on obtient un produit visqueux (rendement de 80%), dont le $\overline{DP}_n$, en fonction de r et des télogènes utilisés, sont réunis dans le tableau suivant:

| | $\overline{DP}_n$ | | |
|---|---|---|---|
| r | $HPO(OEt)_2$ | $HCl_2C-CO_2CH_3$ | $CCl_3-CO_2CH_3$ |
| 1 | 2,4 | 3,45 | – |
| 0,5 | 4,5 | 5,9 | 2,6 |
| 0,25 | 8,5 | 12,5 | 5 |
| 0,2 | 10 | 13,5 | 6,3 |

Exemple 15

Estérification des télomères de l'acétate d'allyle

Les produits obtenus à l'exemple 14 sont traités de la même façon qu'à l'exemple 11. On obtient avec un taux de greffage de 100% les télomères photoréticulables correspondants.

Les télomères et cotélomères photoréticulables selon l'invention, en raison de leurs propriétes d'hydrosolubilité, d'encrophile, de souplesse, d'adhérence aux métaux, de résistance aux huiles, trouvent leurs applications aussi bien l'imprimerie: fabrication de plaques offset, photogravure, flexographie, que dans la réalisation de certains éléments d'ordinateurs ou de microprocesseurs (circuits imprimés) et comme agent de revêtement de certains produits métallurgiques.

**Revendications**

1. Télomères de formule générale

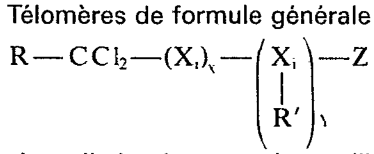

dans laquelle la séquence des maillons

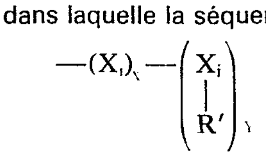

est issue d'un même taxogène $X_1$ possédant une fonction libre appartenant au groupe constitué par les fonctions alcool primaire, acide, alcool secondaire et où les maillons

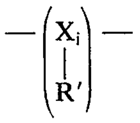

correspondant à la forme éstérifiée de $X_i$, R' étant le radical du groupement servant à l'estérification, $RCCl_2-$ et $-Z$ étant les parties du télogène $RCCl_2Z$ où $-Z$ appartient au groupe constitué par les radicaux $-H$, $-Cl$, $-Br$ et R appartient au groupe constitué par des radicaux simples appartenant au groupe constitué par $-Cl$, $CH_3-O-CO-$, $-CF_3$ et des radicaux macromoléculaires, caractérisés en ce que $X_1$ appartient au groupe constitué par les sous-groupes $X_1$, $X_2$, $X_3$, $X_4$ dans lesquels $X_1$ est représenté par l'acrylate d'hydroxy 2 éthyle et le méthacrylate d'hydroxy 2 éthyle, $X_2$ est représenté par l'acide acrylique et l'acide méthacrylique, $X_3$ est représenté par l'alcool vinylique, $X_4$ est représenté par l'alcool allylique, que $0 < x \leq 500$, $1 < y \leq 500$, $1 < x + y \leq 1000$, que le groupement servant à l'estérification possède au moins une double liaison photoréticulable et appartient au groupe constitué par des acides et des chlorures d'acides pour $X_1$, $X_3$ et $X_4$ et par des alcools pour $X_2$.

2. Télomères suivant la revendication 1, caractérisés en ce que le groupement servant à l'estéri fication de $X_1$, $X_3$ et $X_4$ appartient au groupe constitué par l'acide acrylique, l'acide méthacrylique, l'acide cinnamique, l'acide furyl acrylique, l'acide cinnamylidène et l'acide allylique.

3. Télomères suivant la revendication 1, caractérisés en ce que le groupement servant à l'estérification de $X_2$ appartient au groupe constitué par l'acrylate et le méthacrylate d'hydroxy 2 éthyle, l'alcool allylique et l'alcool cinnamique.

4. Télomères suivant la revendication 1, caractérisés en ce que quand le taxogène est du type $X_1$ et $X_2$, le radical $-Z$ est de préférence limité à $-Cl$.

5. Télomères suivant la revendication 1, caractérisés en ce que lorsque le taxogène est du type $X_1$, R est un radical simple appartenant au groupe constitué par $-Cl$, $CH_3-O-CO-$, $CF_3-$.

6. Télomères suivant la revendication 1, caractérisés en ce que lorsque le taxogène est du type $X_1$, R est un radical macromoléculaire appartenant au groupe constitué par

$$-(CF_2-CFCl)_{n_1}-Cl$$

où $1 \leq n \leq 10$,

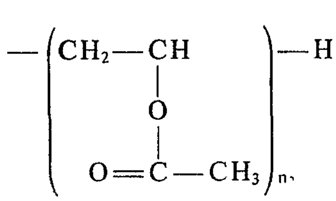

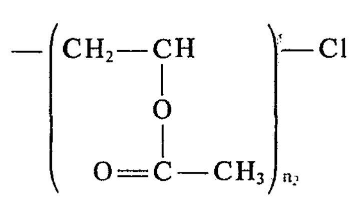

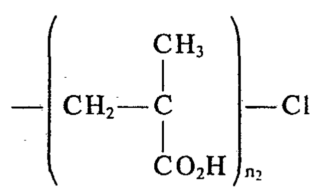

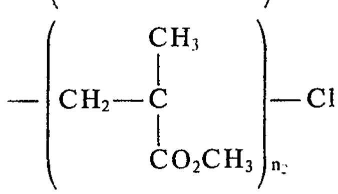

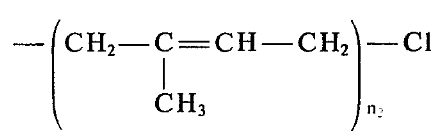

où $1 \leq n_2 \leq 500$.

7. Télomères suivant la revendication 1, caractérisés en ce que lorsque le taxogène est du type $X_2$, R est un radical simple appartenant au groupe constitué par $-Cl$, $-CF_3$.

8. Télomères suivant la revendication 1, caractérisés en ce que lorsque le taxogène est du type $X_2$, R est le radical macromoléculaire $-(CF_2-CFCl)_{n_1}$ où $1 \leq {}_{n_1} \leq 10$.

9. Télomères suivant la revendication 1, caractérisés en ce que lorsque le taxogène est du type $X_3$, R est un radical simple appartenant au groupe constitué par $-Cl$ et $(C_2H_5O)_2-P(O)-$.

10. Télomères suivant la revendication 1, caractérisés en ce que lorsque le taxogène est du type $X_3$, R est un radical macromoléculaire appartenant au groupe constitué par

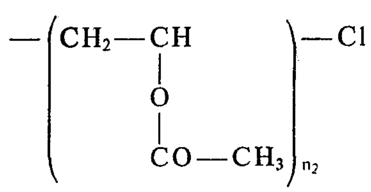

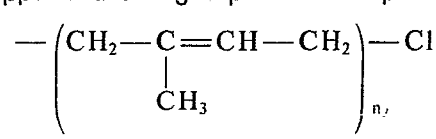

où $1 \leq n_2 \leq 500$.

11. Télomères suivant la revendication 1, caractérisés en ce que lorsque le taxogène est du type $X_4$, R est un radical simple appartenant au groupe constitué par $-CCl_2-CO_2H$, $-CCl_2-CO.CH_3$, $-CCl_3$, $(C_2H_5O)_2-P(O)-$.

12. Procédé de fabrication de télomères du type $X_1$ suivant la revendication 1, caractérisé en ce que l'on télomérise le taxogène en présence d'un catalyseur puis on estérifie de manière à greffer sur les maillons de la séquence de télomère obtenu un groupement non saturé.

13. Procédé de fabrication de télomères suivant la revendication 12, caractérisé en ce que l'on bistélomérise le télomère obtenu avant de l'estérifier.

14. Procédé de fabrication de télomères suivant la revendication 12, caractérisé en ce que lorsque le taxogène est du type vinylique, allylique, on télomérise en présence d'un catalyseur péroxydique et utilise le chloroforme comme télogène.

15. Procédé de fabrication de télomères suivant la revendication 12, caractérisé en ce que lorsque le taxogène est du type acrylique, diénique conjugué chlorotrifluoroéthylène, on télomérise en présence d'un catalyseur redox et utilise le tétrachlorure de carbone comme télogène.

16. Procédé de fabrication de télomères suivant les revendications 12 et 13, caractérisé en ce que si le nouveau taxogène est du type vinylique et allylique, la bistélomérisation se fait en présence d'un catalyseur peroxydique.

17. Procédé de fabrication de télomères suivant la revendication 12 et 13, caractérisé en ce que si le nouveau taxogène est du type acrylique diénique conjugué, chlorotrifluoroéthylène, la bistélomérisation se fait en présence d'un catalyseur redox.

18. Procédé de fabrication de télomères suivant les revendication 14 et 16, caractérisé en ce que le taxogène mis en oeuvre est un acétate que l'on hydrolyse ensuite par le méthanolate de sodium de façon à faire apparaître les fonctions alcool sur lesquelles seront greffés par la suite les groupements photoréticulables.

19. Procédé de fabrication de télomères suivant la revendication 12, caractérisé en ce que lorsque l'estérification est faite au moyen de chlorure d'acide acrylique, on procède à une activation par les complexes de pyridinium.

20. Procédé de fabrication de télomères suivant la revendication 12, caractérisé en ce que lorsque l'estérification est faite au moyen de l'acide arylique, on recourt à l'estérification azéotropique directe en présence d'acide paratoluène sulfonique et d'un solvant.

21. Procédé de fabrication de télomères suivant la revendication 12, caractérisé en ce que lorsque l'estérification est faite sur un taxogène du type $X_2$, on procède avant greffage à l'activation des fonctions acides par passage au chlorure d'acide en utilisant le chlorure de thionyle.

**Patentansprüche**

1. Telomere der allgemeinen Formel

$$R-CCl_2-(X_i)_x-\begin{pmatrix} X_i \\ | \\ R' \end{pmatrix}_y-Z$$

in der die Reihenfolge der Kettenglieder

$$-(X_i)_x-\begin{pmatrix} X_i \\ | \\ R' \end{pmatrix}_y,$$

sich von einem gleichen Taxogen $X_i$ mit einer freien Funktion aus der aus primären Alkoholen, Säuren und sekundären Alkoholen bestehenden Gruppe ableiten und die Kettenglieder

$$-\begin{pmatrix} X_i \\ | \\ R' \end{pmatrix}-$$

der veresterten Form vom $X_i$ entsprechen, wobei R' der Rest der zur Veresterung dienenden Gruppe ist, $RCCl_2-$ und $-Z$ die Bruchstücke des Telogens $RCCl_2Z$ sind, in dem Z zur Gruppe der Reste $-H$, $-Cl$ und $-Br$ und R zur Gruppe der einfachen Reste $-Cl$, $CH_3-O-CO-$ und $CF_3$ oder zur Gruppe der makromolekularen Reste gehört, dadurch gekennzeichnet, daß

$X_i$ aus den Untergruppen $X_1$, $X_2$, $X_3$ und $X_4$ ausgewählt wird, wobei
$X_1$ 2-Hydroxyethylacrylat oder 2-Hydroxyethylmethacrylat,
$X_2$ Acryl- oder Methacrylsäure,
$X_3$ Vinylalkohol und

$X_4$ Allylalkohol bedeuten,
$0 < x \leq 500$,
$1 < y \leq 500$ und
$0 < x + y \leq 1000$ und

die zur Veresterung dienende Gruppe mindestens eine durch Licht vernetzbare Doppelbindung aufweist und aus der aus Säuren und Säurechloriden $X_1$, $X_3$ und $X_4$ und Alkoholen für $X_2$ bestehenden Gruppe ausgewählt wird.

2. Telomere nach Anspruch 1, dadurch gekennzeichnet, daß die zur Veresterung von $X_1$, $X_3$ und $X_4$ dienende Gruppe zu der aus Acrylsäure, Methacrylsäure, Zimtsäure, Furylacrylsäure, Cinnamylidensäure und Vinylessigsäure bestehenden Gruppe gehört.

3. Telomere nach Anspruch 1, dadurch gekennzeichnet, daß die zur Veresterung von $X_2$ dienende Gruppe aus der aus 2-Hydroxyethylacrylat oder -methacrylat, Allylalkohol und Cinnamylalkohol bestehenden Gruppe ausgewählt wird.

4. Telomere nach Anspruch 1, dadurch gekennzeichnet, daß, wenn das Taxogen vom Typ $X_1$ und $X_2$ ist, –Z vorzugsweise –Cl ist.

5. Telomere nach Anspruch 1, dadurch gekennzeichnet, daß, wenn das Taxogen vom Typ $X_1$ ist, R ein einfacher Rest –Cl, $CH_3$–O–CO– oder $CF_3$ ist.

6. Telomere nach Anspruch 1, dadurch gekennzeichnet, daß, wenn das Taxogen vom Typ $X_1$, R ein makromolekularer Rest aus der Gruppe von

$$-(CF_2-CFCl)_{n_1},$$

wobei $1 \leq n \leq 10$,

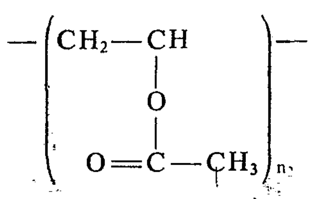
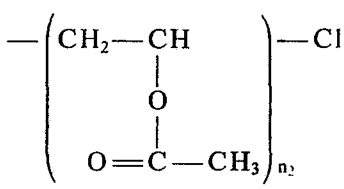
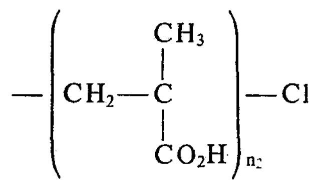
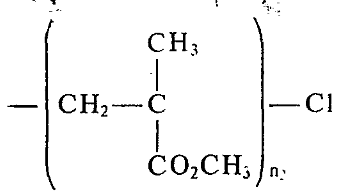
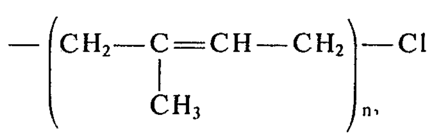

wobei $1 \leq n_2 \leq 500$, ist.

7. Telomere nach Anspruch 1, dadurch gekennzeichnet, daß, wenn das Taxogen vom Typ $X_2$ ist, R ein einfacher Rest –Cl oder $-CF_3$ ist.

8. Telomere nach Anspruch 1, dadurch gekennzeichnet, daß, wenn das Taxogen vom Typ $X_2$ ist, R ein makromolekularer Rest $-(CF_2-CFCl)_{n_1}$ ist, wobei $1 \leq n_1 \leq 10$.

9. Telomere nach Anspruch 1, dadurch gekennzeichnet, daß, wenn das Taxogen vom Typ $X_3$ ist, R ein einfacher Rest –Cl oder $(C_2H_5O)_2-P(O)-$ ist.

10. Telomere nach Anspruch 1, dadurch gekennzeichnet, daß, wenn das Taxogen vom Typ $X_3$ ist, R ein makromolekularer Rest aus der Gruppe von

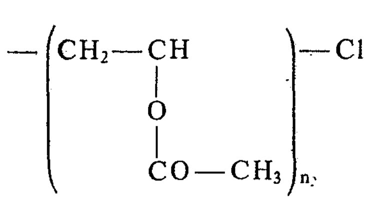
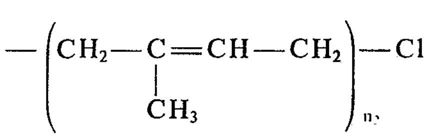

ist, wobei $1 \leq n_2 \leq 500$.

11. Telomere nach Anspruch 1, dadurch gekennzeichnet, daß, wenn das Taxogen vom Typ $X_4$ ist, R ein einfacher Rest $-CCl_2-CO_2H$, $-CCl_2-CO_2CH_3$, $-CCl_3$ oder $(C_2H_5O)_2-P(O)-$ ist.

12. Verfahren zur Herstellung der Telomere vom Typ $X_1$ gemäß Anspruch 1, gekennzeichnet durch die Telomerisation des Taxogens in Gegenwart eines Katalysators und die anschließende Veresterung durch Aufpropfung einer ungesättigten Gruppe auf die Kettenglieder des erhaltenen Telomers.

13. Verfahren nach Anspruch 12, gekennzeichnet durch die Bistelomerisation des erhaltenen Telomers vor der Veresterung.

14. Verfahren nach Anspruch 12, gekennzeichnet durch die Telomerisation in Gegenwart eines Peroxidkatalysators und die Verwendung von Chloroform als Telogen, wenn das Taxogen vom Vinyl- oder Allyltyp ist.

15. Verfahren nach Anspruch 2, gekennzeichnet durch die Telomerisation in Gegenwart eines Redoxkatalysators und die Verwendung von Tetrachlorkohlenstoff als Telogen, wenn das Taxogen vom Acryl-, konjugierten Dien- oder Chlortrifluorethylentyp ist.

16. Verfahren nach Anspruch 12 und 13, gekennzeichnet durch die Bistelomerisation in Gegenwart eines Peroxidkatalysators, wenn das neue Taxogen vom Vinyl- oder Allyltyp ist.

17. Verfahren nach Anspruch 12 und 13, gekennzeichnet durch die Bistelomerisation in Gegenwart eines Redoxkatalysators, wenn das neue Taxogen vom Acryl-, konjugierten Dien- opder Chlortrifluorethylentyp ist.

18. Verfahren nach Anspruch 14 und 16, dadurch gekennzeichnet, daß als Taxogen ein Acetat verwendet wird, das dann mit Natriummethanolat zu Alkoholgruppen hydrolysiert wird, auf die durch Licht vernetzbare Gruppen aufgepfropft werden.

19. Verfahren nach Anspruch 12, dadurch gekennzeichnet, daß eine Aktivierung mit Pyridiniumkomplexen durchgeführt wird, wenn die Veresterung mit Acrylsäurechlorid erfolgt.

20. Verfahren nach Anspruch 12, dadurch gekennzeichnet, daß bei Veresterung mit Acrylsäure eine direkte azeotrope Veresterung in Gegenwart von p-Toluolsulfonsäure und eines Lösungsmittels durchgeführt wird.

21. Verfahren nach Anspruch 12, dadurch gekennzeichnet, daß bei Veresterung auf ein Taxogen des Typs $X_2$, die Säuregruppen durch Umwandlung in ein Säurechlorid mit Thionylchlorid vor dem Aufpfropfen aktiviert werden.

## Claims

1. Telomers of the general formula

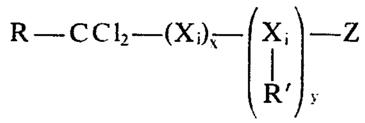

wherein the sequence of

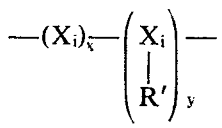

links emanates from an idential taxogen $X_i$ with a free function, belonging to the group made up of primary alcohol, acid and secondary alcohol functions, and where the

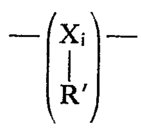

links correspond to the esterified form of $X_i$, R' being the radical of the group used for esterification, $RCCl_2$— und —Z being the parts of the telogen $RCCl_2Z$ where —Z belongs to the group made up of the —H, —Cl and —Br radicals and R belongs to the group made up of simple radicals belonging to the group made up of —Cl, $CH_3$—O—CO—, $CF_3$ and macromolecular radicals, characterised in that $X_i$ belongs to the group made up of sub-groups $X_1$, $X_2$, $X_3$, $X_4$, in which $X_1$ is represented by 2-hydroxy ethyl acrylate and 2-hydroxy ethyl methacrylate, $X_2$ is represented by acrylic acid and methacrylic acid, $X_3$ is represented by vinyl alcohol, $X_4$ is represented by allyl alcohol, that $0 < x \leq 500$, $1 < y \leq 500$, $1 < x + y \leq 1000$, and that the group used for esterification has at least one double bond which can be cross-linked by light and belongs to the group made up of acids and acid chlorides in the case of $X_1$, $X_3$, and $X_4$ and alcohols in the case of $X_2$.

2. The telomers of claim 1, characterised in that the group used to esterify $X_1$, $X_3$ and $X_4$ belongs to the following group of acids: acrylic, methacrylic, cinnamic, furyl acrylic, cinnamylidene and allyl.

3. The telomers of claim 1, characterised in that the group used to esterify $X_2$ belongs to the group comprising 2-hydroxy ethyl acrylate and methacrylate, allyl alcohol and cinnamic alcohol.

4. The telomers of claim 1, characterised in that when the taxogen is of the type $X_1$ and $X_2$, the radical —Z is preferably limited to —Cl.

5. The telomers of claims 1, characterised in that when the taxogen is of the type $X_1$, R is a simple radical belonging to the group made up of —Cl, $CH_3$—O—CO— and $CF_3$—.

6. The telomers of claim 1, characterised in that the taxogen is of the $X_1$ type, R is a macromolecular radical belonging to the group made up of:

$-(CF_2-CFCl)_{n_1}-Cl$

where $1 \leq n \leq 10$,

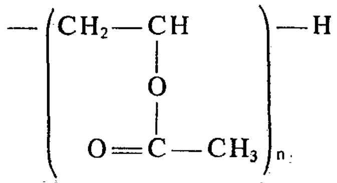 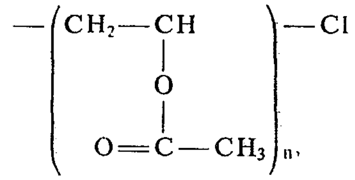 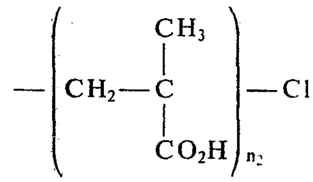

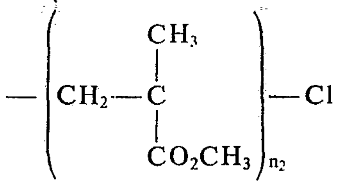 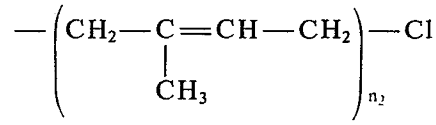

where $1 \leq n_2 \leq 500$.

7. The telomers of claim 1, characterised in that when the taxogen is of the type $X_2$, R is a simple radical belonging to the group made up of $-Cl$ and $-CF_3$.

8. The telomers of claim 1, characterised in that when the taxogen is the type $X_2$, R is the macromolecular radical $-(CF_2-CFCl)_{n_1}$ $1 \leq n_1 \leq 10$.

9. The telomers of claim 1, characterised in that when the taxogen is of the type $X_3$, R is a simple radical belonging to the group made up of $-Cl$ and $(C_2H_5O)_2-PO-$.

10. The telomers of claim 1, characterised in that when the taxogen is of the $X_3$ type, R is a macromolecular radical belonging to the group made up of

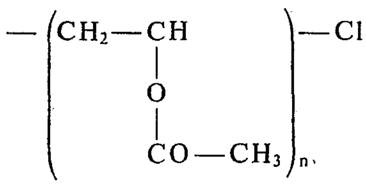 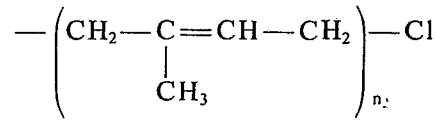

where $1 \leq n_2 \leq 500$.

11. The telomers of claim 1, characterised in that when the taxogen is of the type $X_4$, R is a simple radical belonging to the group made up of $-CCl_2-CO_2H$, $-CCl_2-CO_2CH_3$, $-CCl_3$ and $(C_2H_5O)_2-PO-$.

12. A method of preparing telomers of type $X_i$ according to claim 1, characterised in that the taxogen is telomerised in the presence of a catalyst, then esterified so as to graft an unsaturated group onto the links of the sequence of the telomer obtained.

13. The method of claim 12, characterised in that the telomer obtained is bistelomerised before being esterified.

14. The method of claim 12, characterised in that when the taxogen is of the vinyl or allyl type, telomerisation is carried out in the presence of a peroxidic catalyst, and chloroform is used as the telogen.

15. The method of claim 12, characterised in that when the taxogen is of the acrylic, conjugated diene or chlorotrifluoroethylene type, telomerisation is carried out in the presence of a redox catalyst and carbon tetrachloride is used as the telogen.

16. The method of claims 12 and 13, characterised in that if the new taxogen is of the vinyl and allyl type, bistelomerisation takes place in the presence of a peroxidic catalyst.

17. The method of claims 12 and 13, characterised in that if the new taxogen is of the acrylic, conjugated diene or chlorotrifluoroethylene type, bistelomerisation takes place in the presence of a redox catalyst.

18. The methods of claims 14 and 16, characterised in that the taxogen used is an acetate, which is then hydrolysed by sodium methanolate so as to make the alcohol functions appear, onto which functions the photo-crosslinkable groups will subsequently be grafted.

19. The method of claim 12, characterised in that when esterification is effected with acrylic acid chloride, the product is then activated by pyridinium complexes.

20. The method of claim 12, characterised in that when esterification is carried out with acrylic acid, one has recourse to direct azeotropic esterification in the presence of sulfonic paratoluene acid and a solvent.

21. The method of claim 12, characterised in that when esterification is carried out on a type $X_2$ taxogen, grafting is preceded by activation of the acid functions by passing them through acid chloride, using thionyl chloride.